# EUROPÄISCHE PATENTSCHRIFT

(11) **EP 0 663 450 B1**
(45) Veröffentlichungstag und Bekanntmachung des Hinweises auf die Patenterteilung: **05.01.2000**
(21) Anmeldenummer: 95890010.2
(22) Anmeldetag: 12.01.1995
(51) Int. Cl.: C21C 5/56, F27B 1/02

(54) **Verfahren und Vorrichtung zur Herstellung von Eisenschmelzen in Herd-Lichtbogenofen mit schwenkbaren Elektroden**
Method and electric arc hearth furnace with pivotable electrodes for the production of iron melts
Procédé et four à arc électrique avec électrodes pivotantes pour la production de fer en fusion

(30) Priorität: 14.01.1994 AT 6494
(43) Veröffentlichungstag der Anmeldung: 19.07.1995
(73) Patentinhaber: VOEST-ALPINE INDUSTRIEANLAGENBAU GMBH, 4020 Linz (AT)
(72) Erfinder: Ramaseder, Norbert, Dipl.-Ing., A-4020 Linz (AT); Dimitrov, Stefan, Dipl.-Ing. Dr., A-4031 Linz (AT); Pirklbauer, Wilfried, Dipl.-Ing. Dr., A-4481 Niederneukirchen 199 (AT); Schubert, Hermann, Ing., A-4040 Linz (AT)
(74) Vertreter: Kopecky, Helmut, Dipl.-Ing. Kopecky & Schwarz Patentanwälte

(56) Entgegenhaltungen:
- EP-A- 0 240 485
- EP-A- 0 548 041
- DE-C- 3 609 923
- FR-A- 2 611 876
- GB-A- 2 088 904
- US-A- 2 382 534
- US-A- 4 514 218

## Beschreibung

Die Erfindung betrifft ein Verfahren zum Herstellen von Eisenschmelzen, insbesondere von Stahlschmelzen, durch chargenweises Einschmelzen von Eisenträgern, d.h. eisenhältigem Material, in einem metallurgischen Gefäß mit Hilfe von zumindest zum Teil durch mindestens einen Lichtbogen eingebrachter Energie, sowie eine Anlage zur Durchführung des Verfahrens.

Aus der DE-C 3 609 923 ist ein Verfahren und eine Vorrichtung zum fortlaufenden Schmelzen von Schrott zu Rohstahl bekannt, wobei die Wärme des Ofengases zum Erhitzen des Schrottes genutzt wird. Der Schrott wird in einem zentrisch auf dem Herdofen aufgesetzten Schacht vorgewärmt und zentral in den Herdofen eingebracht. Um den Schacht sind im Kreis Elektroden angeordnet, mit deren Hilfe der Schrott eingeschmolzen wird. Hierbei ist die Seitenwand des Herdofens einer sehr hohen Wärmebelastung ausgesetzt, da die Lichtbögen zwischen der zentrisch eingebrachten Schrottsäule und den Wänden des Herdofens brennen. Es kommt zu einem erhöhten Verschleiß der feuerfesten Auskleidung, woraus eine relativ kurze Lebensdauer des Herdofens resultiert. Weiters geht ein großer Teil der eingebrachten Energie durch Abstrahlung an die Ofenwände verloren.

Eine ähnliche Vorrichtung, bei der eine Schmelze chargenweise hergestellt wird, ist aus der US-A 2 382 534 bekannt.

Eine Anlage mit einem Gleichstromlichtbogenofen, einem auf das Ofengefäß des Lichtbogenofens aufgesetzten Schacht und mit schräg in den Lichtbogenofen ragenden Elektroden, welche in Elektrodenlängsrichtung bewegbar sind, ist aus der FR-A-2 611 876 bekannt Die Elektroden sind symmetrisch bezüglich der vertikalen Achse des Ofens angeordnet. Die Neigung der Elektroden zur Vertikalen ist unter einem Winkel von vorzugsweise 5 bis 15 Grad eingestellt. Schrott oder anderes metallisches Material wird von oben durch den Schacht in den Gleichstromlichtbogenofen eingebracht, wobei das Material im Schacht mittels der Ofenabgase vorgewärmt wird.

Die Erfindung bezweckt die Vermeidung der oben genannten Nachteile und Schwierigkeiten und stellt sich die Aufgabe, ein Verfahren sowie eine Anlage zur Durchführung des Verfahrens zu schaffen, welche eine besonders günstige Ausnützung der eingebrachten Energie unter weitgehender Schonung des metallurgischen Gefäßes ermöglichen. Insbesondere sollen die spezifischen Betriebs- und Investitionskosten (auch Umbaukosten) bei der Elektrostahlerzeugung vor allem durch geringeren Elektroenergieverbrauch und Verkürzung der Schmelz- bzw. Schmelzenfolgezeit im Vergleich zum konventionellen Lichtbogenschmelzverfahren niedrig sein.

Diese Aufgabe wird erfindungsgemäß durch die Kombination folgender Merkmale gelöst:
- Chargieren einer ersten Teilmenge des Gesamteinsatzes der Eisenträger unter Bildung eines Schüttkegels im Zentrumsbereich,
- Schmelzen eines zentralen Kraters in den von der ersten Teilmenge gebildeten Schüttkegel mit Hilfe zentrumsnahe eingebrachter Lichtbogenenergie,
- Chargieren mindestens einer weiteren Teilmenge in den zentralen Krater mit anschließendem abermaligen Schmelzen eines zentralen Kraters und
- vollständiges Einschmelzen der noch festen Eisenträger mit Hilfe zentrumsentfernter und wandnäher eingebrachter Lichtbogenenergie, die mittels schwenkbarer Elektroden einbringbar ist,
- worauf der Abstich gegebenenfalls nach einem Frischen und/oder Feinen erfolgt.

Wesentlich für das erfindungsgemäße Verfahren ist das Chargieren in Teilmengen, die es ermöglichen, die über den Lichtbogen eingebrachte Energie während nahezu des gesamten Schmelzprozesses unter Abschirmung der Gefäßwände aufzunehmen. Hierdurch ergibt sich eine beträchtliche Verminderung des Verschleißes der feuerfesten Auskleidung des metallurgischen Gefäßes sowie eine beträchtliche Verminderung der Wärmeverluste. In Kombination mit einer möglichst frühzeitigen Bildung einer Schaumschlacke werden diese Effekte noch verstärkt. Bei der erst gegen Ende des Schmelzprozesses erfolgenden Randzonenaufschmelzung kommt es infolge der Schaumschlacke ebenfalls zu keiner unmittelbaren Belastung der Gefäßwände durch die eingebrachte Lichtbogenenergie.

Zweckmäßig werden zur Ausnützung des Wärmeinhalts der Prozeßgase die Eisenträger vor dem Chargieren in das metallurgische Gefäß in einen Vorwärmschacht eingebracht, von aus dem metallurgischen Gefäß abgezogenen heißen Prozeßgasen umströmt bzw. vorgewärmt und anschließend in das metallurgische Gefäß heiß chargiert.

Zur Herstellung von Stahl werden vorteilhaft zur Herstellung von Stahl Schlackenbildner und gegebenenfalls Kohlenstoffträger chargiert, vorzugsweise in Teilmengen.

Vorteilhaft wird eine Teilmenge der Schlackenbildner bereits mit der ersten Teimenge der Eisenträger unter möglichst frühzeitiger Bildung einer Schaumschlacke chargiert.

Eine optimale Ausnutzung des Energieinhaltes entstehender Prozeßgase ist gegeben, wenn Prozeßgase durch Zuführen eines sauerstoffhältigen Gases in die und/oder auf die Schaumschlacke und/oder oberhalb derselben in das metallurgische Gefäß und/oder in den Vorwärmschacht nachverbrannt werden.

Eine weitere Einsparung an elektrischer Energie läßt sich dadurch erzielen, daß das Schmelzen der ersten Teilmenge durch Einblasen eines sauerstoffhältigen Gases unterstützt wird.

Bevorzugt wird auch das Schmelzen der der ersten Teilmenge nachfolgend chargierten Teilmenge(n) durch Einblasen eines sauerstoffhältigen Gases unterstützt.

Vorzugsweise wird eine Restschmelze in dem metallurgischen Gefäß belassen, und die erste Teilmenge in die Restschmelze chargiert.

Zweckmäßig werden als Eisenträger Mischschrott und/oder Feinschrott und/oder Schrederschrott eingesetzt, wobei die Eisenträger nur gering mit organischen Anteilen verunreinigt sind, wodurch die Prozeßgase weitestgehend frei von Dioxinen und anderen Schadstoffen sind und mit relativ wenig Aufwand entsorgt werden können.

Eine bevorzugte Variante ist dadurch gekennzeichnet, daß als Eisenträger Mischschrott und/oder Feinschrott und/oder Schrederschrott (Eisenträger I) einerseits und Eisenschwamm (Eisenträger II) andererseits getrennt und unabhängig voneinander eingesetzt werden, wobei die erste Teilmenge von Eisenträgern I sowie gegebenenfalls von Eisenträgern II und die weitere(n) Teilmenge(n) zumindest teilweise von Eisenträgern II gebildet wird bzw. werden, wobei vorteilhaft nur die Eisenträger I von aus dem metallurgischen Gefäß abgezogenen heißen Abgasen umströmt und anschließend in dieses heiß chargiert werden, wogegen die Eisenträger II, welche z.B. nicht reoxidiert werden dürfen, ohne Vorwärmung durch die Prozeßgase - bei Raumtemperatur oder auch heiß, z.B. beim Heißeinsatz von Eisenschwamm aus einer vorgeschalteten Direktreduktionsanlage - chargiert werden.

Zweckmäßig wird eine Bodenspülung mit Inertgas durchgeführt.

Gemäß einer bevorzugten Variante wird ein sauerstoffhältiges Gas über mindestens eine Ein-/Aufblaslanze und/oder Düse bzw. Unterbaddüse in die Schmelze eingeblasen.

Vorzugsweise werden feinkörnige Materialien, wie Eisenträger, Kohlenstoffträger und/oder Schlackenbildner, durch mindestens eine Ein-/Aufblaslanze und/oder Düse bzw. Unterbaddüse und/oder Hohlelektrode unter Verwendung eines Trägergases in das Metallbad eingeblasen.

Als feinkörnige Eisenträger kommen z.B. Eisenkarbid, Eisenschwamm-Unterkorn, Hüttenstaub und gegebenenfalls Erz in Betracht, als feinkörnige Kohlenstoffträger z.B. Feinkohle, Feinkoks und aufbereitete organische Leichtfraktionen.

Vorzugsweise wird die Vorwärmtemperatur der Eisenträger (Eisenträger I) durch Wahl der Länge der Verweilzeit der Eisenträger (Eisenträger I) im Vorwärmschacht eingestellt. Hierdurch gelingt es in einfacher Weise, unerwünschte Erscheinungen, wie Verzunderung, Ankleben bzw. Hängen des Schrottes im Schacht, zu vermeiden.

Gemäß einer bevorzugten Variante wird die Vorwärmtemperatur der Eisenträger (Eisenträger I) durch Wahl von Menge, Zusammensetzung und Temperatur der aus dem metallurgischen Gefäß abgezogenen Prozeßgase eingestellt.

Eine Anlage zum Herstellen von Eisenschmelzen, insbesondere von Stahlschmelzen, ist durch die folgende Kombination von Merkmalen gekennzeichnet:
- ein eine Eisenschmelze aufnehmendes metallurgisches Gefäß,
- mindestens einen ortsfesten, Eisenträger aufnehmenden Schacht, der in das metallurgische Gefäß über dessen Deckel mittels einer Absperreinrichtung mündet und
- in das metallurgische Gefäß von oben ragende Elektroden, die während des Herstellens von Eisenschmelzen von einer in Richtung zum Gefäßzentrum gerichteten Position in eine näher zur Wand des metallurgischen Gefäßes gerichteten Position schwenkbar sind.

Hierbei ist vorzugsweise das metallurgische Gefäß kippbar.

Gemäß einer bevorzugten Ausführungsform ist das metallurgische Gefäß heb-, senk- und verfahrbar.

Eine Anlage, mit der eine besonders kurze Schmelzenfolgezeit erzielbar ist, ist dadurch gekennzeichnet, daß der Schacht über eine im Zentrumsbereich des Deckels angeordnete Öffnung in das metallurgische Gefäß mündet und daß mehrere Elektroden den Schacht umgeben, vorzugsweise in radialsymmetrischer Anordnung, und durch den Deckel in das Innere des metallurgischen Gefäßes ragen.

Hierbei sind zweckmäßig die Elektroden in einer zum metallurgischen Gefäß radialgerichteten Vertikalebene schwenkbar, vorzugsweise über einen Bereich, von der Vertikalen ausgehend in eine in Richtung zum Zentrum des metallurgischen Gefäßes unter 30° zur Vertikalen gerichteten Position A bis in eine um max. 10° von der Vertikalen abweichende, nach außen gerichtete Position C.

Zur Erzielung einer effizienten Vorwärmung der Eisenträger (Eisenträger I) ist vorteilhaft die an der Schachtmündung angeordnete Absperrvorrichtung gasdurchlässig und eine Gasableitung am oberen Schachtende vorgesehen.

Um z.B. Eisenschwamm, Kalk und/oder Kohle getrennt von vorgewärmtem Schrott in das metallurgische Gefäß chargieren zu können, ist gemäß einer bevorzugten Ausführungsform zu einem zentralen Schacht, der mit der gasdurchlässigen Absperrvorrichtung versehen ist, mindestens ein seitlich benachbarter Chargierschacht vorgesehen, der über den Deckel des metallurgischen Gefäßes mittels einer vorzugsweise gasdichten Absperreinrichtung in das metallurgische Gefäß mündet, wobei zweckmäßig der untere Teil des Chargierschachtes mit einer schrägen, zum Zentrum des metallurgischen Gefäßes gerichteten Auslaufschurre versehen ist.

Vorzugsweise sind von der Seite und/oder durch den Deckel in das metallurgische Gefäß einbringbare Blaslanzen und/oder Düsen für ein sauerstoffhältiges Gas vorgesehen.

Zur Einstellung einer gewünschten Vorwärmtemperatur der Eisenträger (Eisenträger I) ist vorteilhaft im die Eisenträger I aufnehmenden Schacht mindestens eine Düse für die Zuführung von sauerstoffhältigem und/oder stickstoffhältigem Gas vorgesehen.

Eine einfache Betriebsweise der erfindungsgemäßen Anlage ist dann gegeben, wenn das metallurgische Gefäß auf Hubzylindern gegenüber dem Fundament abgestützt ist, vorzugsweise auf drei Hubzylindern. Hierbei ist vorteilhaft das metallurgische Gefäß in Schmelzposition mittels seitlich in dessen Wand einsetzbarer Verriegelungsbolzen fixierbar, wobei mindestens zwei Verriegelungsbolzen unter Bildung einer Schwenkachse für das metallurgische Gefäß (z.B. zum Abstich) zueinander fluchtend angeordnet sind, und die Verriegelungsbolzen mittels einer Stelleinrichtung aus einer in die Wand des metallurgischen Gefäßes eingreifenden Verriegelungsposition in eine zurückgezogene, das metallurgische Gefäß freigebende Position und umgekehrt bringbar sind.

Vorteilhaft ist die Anlage zur Erzielung einer hohen Verfügbarkeit bei möglichst geringen Investitionskosten gekennzeichnet durch einen bis unterhalb des metallurgischen Gefäßes fahrbaren Wagen, auf dem wahlweise eine Pfanne oder das metallurgische Gefäß selbst absetzbar und mittels des Wagens verfahrbar sind.

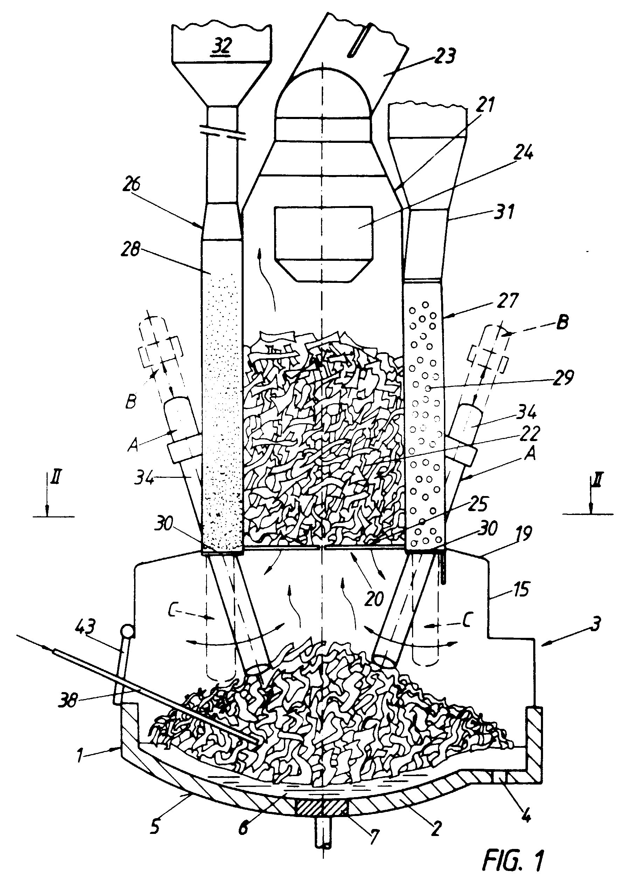

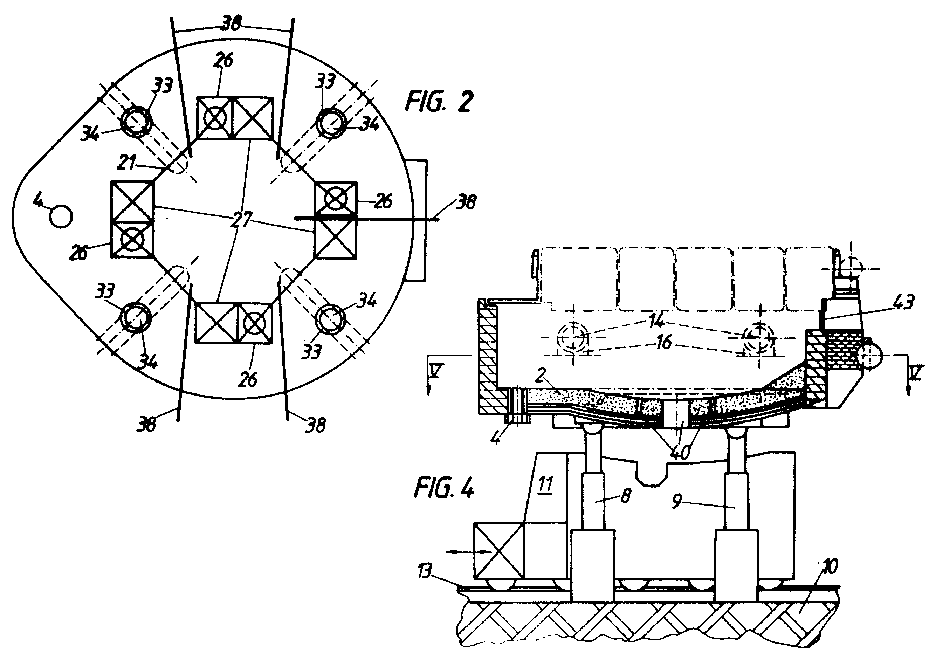

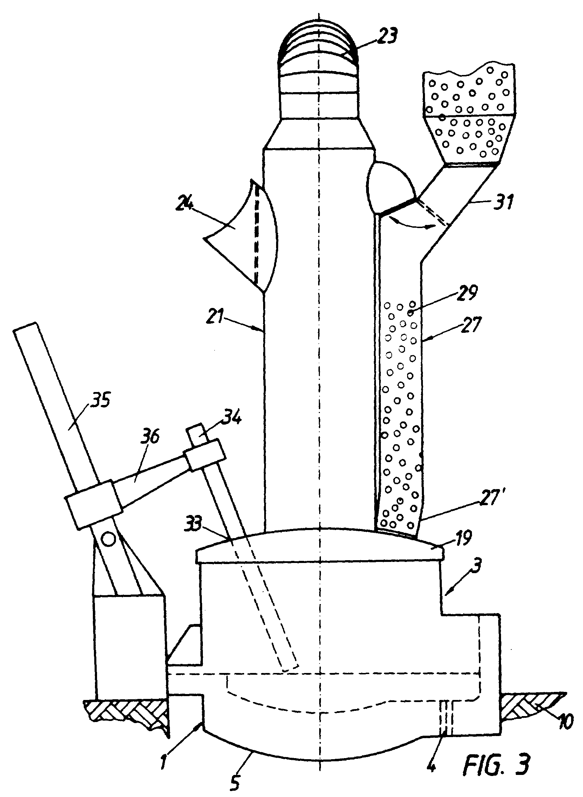

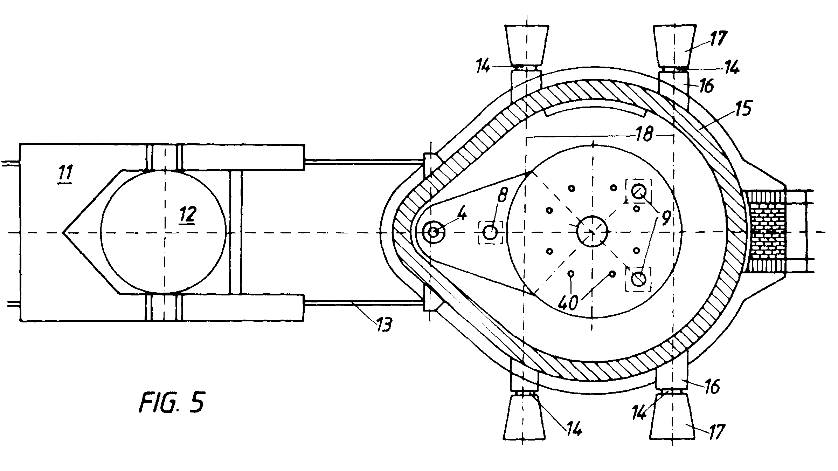

Die Erfindung ist nachfolgend anhand der Zeichnung näher erläutert, wobei Fig. 1 einen Vertikal-Achsschnitt durch eine erfindungsgemäße Anlage und Fig. 2 einen gemäß der Linie II-II der Fig. 1 geführten Schnitt in schematischer Darstellung veranschaulichen. Fig. 3 zeigt eine Seitenansicht der erfindungsgemäßen Anlage. Die Fig. 4 und 5 veranschaulichen die Abstützung des metallurgischen Gefäßes gegenüber dem Fundament, wobei Fig. 4 einen Vertikal-Achsschnitt durch das metallurgische Gefäß und Fig. 5 einen gemäß der Linie V-V der Fig. 4 geführten Schnitt zeigen. Die Figurenreihe 6 a bis 6g veranschaulicht schematisch das erfindungsgemäße Verfahren.

Mit 1 ist ein mit einer feuerfesten Auskleidung 2 versehenes Ofengefäß eines Elektrolichtbogenofens 3 bezeichnet, das mit einem Erkerabstich 4 versehen ist. Der Boden 5 des Elektrolichtbogenofens 3 ist zur Aufnahme der Schmelze 6 gewölbt ausgebildet. Er weist gegebenenfalls eine Bodenanode 7 auf.

Wie aus den Fig. 4 und 5 ersichtlich ist, ist das Ofengefäß 1 über seinen Boden 5 mittels dreier Druckmittelzylinder 8, 9 gegenüber dem Fundament 10 abgestützt. Es kann mit Hilfe der Druckmittelzylinder 8, 9 gehoben und gesenkt werden, beispielsweise auf einen unterhalb des Ofengefäßes 1 verfahrbaren Wagen 11, auf dem auch eine Pfanne 12 absetzbar ist, aufgesetzt und mit Hilfe des Wagens 11 entlang von Schienen 13 horizontal verfahren werden. Hierdurch wird die teilweise Befüllung des Ofengefäßes 1 des Elektrolichtbogenofens 3 über einen Schrottkorb ermöglicht, was insbesondere bei schwerem und sperrigem Schrott, wie Brammen- und/oder Knüppelresten, Paketschrott etc. von Vorteil ist. Weiters lassen sich hierdurch Reparaturen in einfacher Weise durchführen, und es kann auch das Ofengefäß 1 bei Auftreten eines Schadens besonders schnell ausgewechselt werden.

Der Wagen 11 ist so gestaltet, daß er entweder die Pfanne 12 unterhalb des Abstiches 4 bringen oder das Ofengefäß 1 aufnehmen kann. Der Wagen 11 ist im Grundriß U-förmig ausgebildet. Dadurch ist es möglich, den Wagen 11 - ohne Pfanne 12 - vollständig unter das Ofengefäß 1 zu bewegen. Der Elektrolichtbogenofen, d. h. sein Ofengefäß 1, ist mittels vier Verriegelungsbolzen 14, die in an seiner Seitenwand 15 vorgesehene Tragkonsolen 16 einsetzbar sind, in angehobener Lage - der Betriebsposition - fixierbar. Diese Verriegelungsbolzen 14 sind mittels Betätigungseinrichtungen 17, wie beispielsweise Druckmittelzylindern, in Ausnehmungen der Tragkonsolen 16 einrückbar bzw. aus diesen rückziehbar. Wie aus Fig. 5 ersichtlich ist, fluchten jeweils zwei der Verriegelungsbolzen 14, wodurch diese Bolzen Schwenkachsen 18 bilden, um die das Ofengefäß 1 schwenkbar ist, soferne jeweils zwei fluchtende Verriegelungsbolzen 14 in die Ausnehmungen der korrespondierenden Tragkonsolen 16 eingesetzt sind. Die Schwenkbewegung selbst kann durch Beaufschlagen der entsprechenden Druckmittelzylinder 8 durchgeführt werden.

Der Elektrolichtbogenofen 3 weist einen heb- und senkbaren Deckel 19 auf, der auf dem Ofengefäß 1 ruht. Der Deckel 19 ist mit einer zentralen Öffnung 20 versehen, oberhalb der ein Schrottvorwärmschacht 21 für Mischschrott 22 vorgesehen ist. Dieser Schrottvorwärmschacht 21 ist am oberen Ende an eine Gasabzugsleitung 23 angeschlossen. Eine Chargieröffnung 24 zum Einbringen des Mischschrottes 22 in den Schrottvorwärmschacht 21 befindet sich knapp darunter. Am unteren Ende des Schrottvorwärmschachtes 21 ist eine gasdurchlässige und zweckmäßig wassergekühlte Absperrvorrichtung 25 vorgesehen, die beispielsweise von schwenkbaren oder verschiebbaren Roststäben gebildet ist und die Öffnung 20 überdeckt.

Mit Hilfe dieser Absperrvorrichtung 25 kann der im Schrottvorwärmschacht 21 eingebrachte Mischschrott 22 zurückgehalten oder in das Ofengefäß 1 chargiert werden. Der ortsfeste Schrottvorwärmschacht 21 ist von einer Stahlkonstruktion, die nicht näher veranschaulicht ist, getragen. An dieser Stahlkonstruktion kann auch der Deckel 19 heb- und senkbar gelagert sein.

Wie insbesondere aus Fig. 2 zu erkennen ist, sind seitlich direkt benachbart zum Schrottvorwärmschacht 21 Chargierschächte 26, 27 einerseits zum Einbringen von Zuschlagstoffen 28 und/oder Kohlenstoffträgern und andererseits zum Einbringen von Eisenschwamm 29 in heißem oder kaltem Zustand vorgesehen. Diese Chargierschächte 26, 27 sind ebenfalls mit wassergekühlten Absperrorganen 30 an ihren Einmündungen in das Ofengefäß 1 versehen, wobei die Absperreinrichtungen 30 der Chargierschächte 26, 27 gasundurchlässig sind. Der Eisenschwamm 29 wird über Fördereinrichtungen, wie Rutschen oder Förderbänder 31, angeliefert. Die Zuschläge bzw. Kohle, Koks etc. gelangen von Vorratsbunkern 32 über Rutschen etc. zu den Chargierschächten 26. Die Auslegung der Chargierschächte 26, 27, d. h. deren Anzahl, Dimensionierung und Anordnung erfolgt in Abhängigkeit von der Art des Chargierguts. Die Chargierschächte 26, 27 sind an ihren unteren Enden jeweils mit einer gegen das Zentrum des Ofengefäßes 1 gerichteten Auslaufschurre 27' versehen.

In der Ausbildung der Schächte 21, 26, 27 bestehen große Variationsmöglichkeiten. Die Schächte können als "Rohr in Rohr"-Konstruktion (mit beliebigen Rohrquerschnitten) ausgebildet sein, wobei das Innenrohr den Vorwärmschacht 21 bildet und der Ringraum um das Innenrohr zur Bildung mehrerer Chargierschächte unterteilt ist, z.B. durch radial ausgebildete Trennwände. Diese Trennwände können ortsfest oder beweglich, gasdicht oder gasdurchlässig sein. Gemäß einer anderen Variante könnten die Schächte von einem einzigen Rohr mit entsprechenden Innen-Trennwänden (z.B. kreuzförmig angeordneten Trennwänden) gebildet sein.

Erfindungsgemäß sind von oben durch Deckelöffnungen 33 in das Innere des Ofengefäßes 1 ragende, selbstverzehrende Elektroden 34 vorgesehen, die vorzugsweise radialsymmetrisch angeordnet sind. Die Elektroden 34 sind über Hubmaste 35 und Tragarme 36 am Fundament 10 abgestützt. Sie sind mittels der Hubmaste 35 heb- und senkbar und in jeweils einer Vertikalebene, die vorzugsweise radial ausgerichtet ist, mindestens innerhalb eines Neigungswinkels von 0 bis 30°, gegenüber der Vertikalen schwenkbar, und zwar in Richtung zum Zentrum des Ofengefäßes 1 hin. Beim Schmelzen der eingebrachten Eisenträger ist der Neigungswinkel der Elektroden 34 meist auf etwa 20 ° eingestellt; er kann für jede einzelne Elektrode 34 unterschiedlich eingestellt bzw. geregelt werden. Die Elektroden 34 können vorzugsweise auch über die Vertikale hinaus nach außen gegen die Wand 15 des Ofengefäßes 1 hin geschwenkt werden, und zwar um etwa 5 bis 10 ° gegenüber der Vertikalen.

Der Elektrodenwechsel wird bevorzugt in der Senkrechtstellung der Elektroden 34 mit Hilfe eines Kranes durchgeführt Eine Elektrodennachnippelung erfolgt an einem Nippelstand oder direkt beim Elektrolichtbogenofen 3. Die Anzahl der vewendeten Graphitelektroden 34 beträgt vorzugsweise zwei bis vier oder mehr; mindestens ist jedoch eine Graphitelektrode vorgesehen.

Zur Optimierung der Schmelzenführung sind erfindungsgemäß zum Ein- und/oder Aufblasen eines sauerstoffhältigen Gases (O₂, Luft, CO₂, H₂O etc.) oder deren Gemischen seitlich in das Ofengefäß 1 einbringbare Lanzen 38 und/oder (hier nicht dargestellte) Düsen, gegebenenfalls auch Unterbaddüsen, vorgesehen.

Zum Ein- und/oder Aufblasen von feinkörnigen Materialien (z. B. Kohlenstoff und/oder Eisenträgern und/oder Schlackenbildnern) sind vorzugsweise weitere Einblaslanzen 39 unterschiedlicher Anordnung vorgesehen. Diese feinkörnigen Materialien können auch über eine oder mehrere Elektrode(n) 34, die dann als Hohlelektrode(n) ausgebildet ist (sind), eingebracht werden. Mit Hilfe dieser feinkörnigen Materialien wird auch eine frühzeitige Bildung einer Schaumschlacke ermöglicht. Weiters können erfindungsgemäß noch Hilfsbrenner (gegebenenfalls als kombinierte Jet-Brenner bzw. Lanzen) sowie Nachverbrennungslanzen/Düsen für Sauerstoff, Luft und andere oxidierende Gase bzw. Gasgemische an mehreren Stellen, die in unterschiedlichen Ebenen angeordnet sein können, vorgesehen sein, gegebenenfalls auch im Schrottvorwärmschacht 21. Der Boden 5 des Ofengefäßes 1 ist zweckmäßig weiters mit Bodendüsen und/oder -steinen 40 für eine Inertgasspülung (N₂, Ar) ausgestattet.

Ein erfindungsgemäßer Prozeßablauf beim Einsatz von Mischschrott 22 und Eisenschwamm 29 geht z.B. wie folgt vor sich:

Der Einsatz besteht aus 50 % Mischschrott 22 (Eisenträger I) und 50 % Eisenschwamm 29 (Eisenträger II). Die chemische Zusammensetzung dieser Einsatzstoffe ist aus Tafel 1 ersichtlich.

Zur Durchführung des Verfahrens dient ein 100 t-DC-Elektro-Lichtbogenofen 3 (ca. 100 t Abstichgewicht, ca. 10 bis 15 t Restsumpf), der folgenderweise ausgestattet ist:
- Trafoleistung: 85 MVA;
- 4 Stk. Graphitelektroden 34 (⌀ = 400 mm, innerhalb eines Neigungswinkels von 0 bis max. 30 ° in der jeweiligen Vertikalebene ausschwenkbar), und eine Bodenanode 7.
- Ein Schrottvorwärmschacht 21 zur Vorwärmung und zum Chargieren des Mischschrottes 22; bei einer nutzbaren Schachthöhe von 5 m und einem, bezüglich dieser konstanten, oktogonalen Schachtquerschnitt (2,9 - 3,0 m lichte Weite) beträgt das gesamte Nutzvolumen des Schrottvorwärmschachtes 21 etwa 40 m³ bzw. sein Fassungsvermögen ca. 30 t Mischschrott 22.
- 4 Stk. kombinierte Chargierschächte 26, 27 mit einer, bezüglich Schrottvorwärmschacht 21, Elektroden 34 und Ofengefäß 1 symmetrischen Anordnung; Ausführung der Chargierschächte 26, 27 als Doppelschächte für die voneinander getrennte/unabhängige Zuführung von Eisenschwamm 29 sowie Zuschlägen 28 und/oder Kohlenstoffträgern (z. B. Kalk und/oder Kohle-/Koksgruß); bei einer Höhe der Chargierschächte 26, 27 von 4 m beträgt der Querschnitt der Eisenschwamm-Chargierschächte 27 700 x 700 mm bzw. der Kalk/Kohle-Chargierschächte 26 700 x 300 mm (Fassungsvermögen der vier Chargierschächte 27 ca. 15 t Eisenschwamm 29).
- 2 Stk. Sauerstofflanzen 38 aus selbstverzehrenden Stahlrohren durch die Seitenwände 15 des Ofengefäßes 1.
- 1 Stk. Manipulator für O₂/Kohle-Einblasen durch die Schlackentür 43.

Der erfindungsgemäße Schmelzablauf unter den oben angegebenen Einsatzverhältnissen erfolgt folgendermaßen:

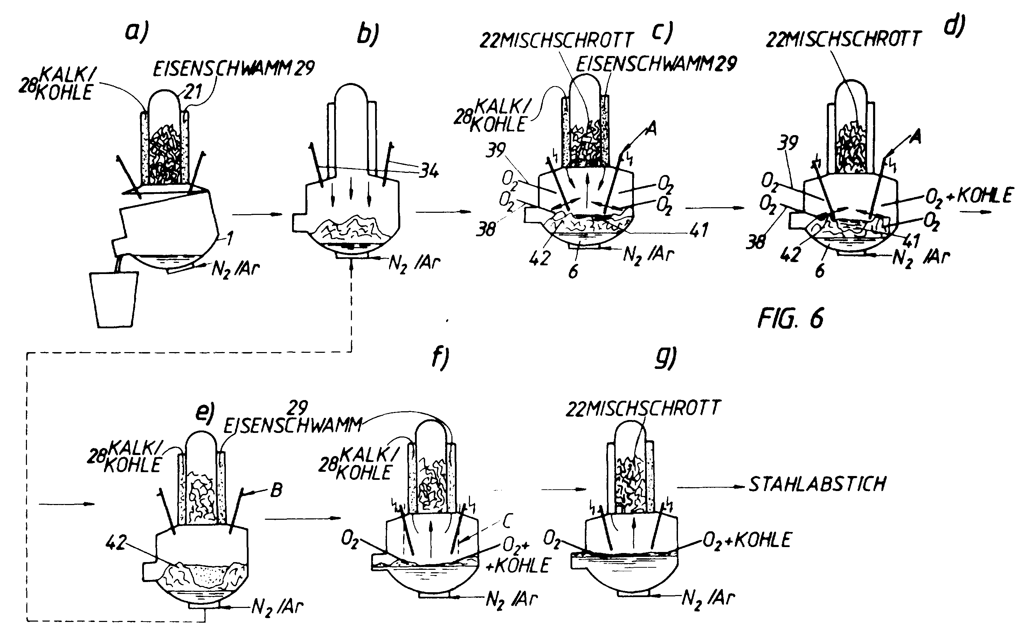

Nach Abstich des Stahles der vorhergehenden Charge (Fig. 6a) werden unter Belassung einer Restschmelze 6 zunächst ca. 27 t Mischschrott 22, ca. 10 t Eisenschwamm 29, 800 kg Kalk 28 und 250 kg Kohle in das Ofengefäß 1 des Elektrolichtbogenofens 3, und zwar auf den bestehenden Stahlsumpf 6, zugegeben (Fig. 6b). Das Chargieren des Mischschrottes 22 erfolgt durch den Schrottvorwärmschacht 21, wobei der Mischschrott 22 bereits während der letzten Schmelze vorgewärmt wurde. Anschließend wird der Schrottvorwärmschacht 21 wieder mit der gleichen Menge (ca. 27 t) Mischschrott 22 befüllt. Eisenschwamm 29, Kohle und Kalk werden durch die Chargierschächte 26 und 27 chargiert. Fallweise (z. B. beim Ofenstart) kann auch Mischschrott 22, gegebenenfalls mit Eisenschwamm 29, in das seitlich, außerhalb des Deckels 19 ausgefahrene Ofengefäß 1 über einen Schrottkorb oder eine Schrottmulde chargiert werden.

Danach wird mit Hilfe der Elektroden 34 etwa die Hälfte des Schüttkegels (ca. 20 t) angefangen von der Haufenmitte (Elektrodenposition A, Neigungswinkel der Elektroden 34 15 bis 25°) unter Einblasen von ca. 250 Nm³O₂ und gegebenenfalls leichtem Schmelzen der Elektroden 34 niedergeschmolzen, und zwar so, daß ein ca. 3,5 - 4,0 m breiter und etwa 1,0 m tiefer Schmelzkrater 41 im Schüttkegel entsteht (Fig. 6c).

Das Erschmelzen des Schmelzkraters 41 ist nach etwa 8 min abgeschlossen (bei ca. 1 min mit 25 MW und ca. 7 min mit 65 MW für die Zuführung der erforderlichen Schnlelzenergie von ca. 7500 bis 8000 kWh).

Die erfindungsgemäß bevorzugten Abmessungen des Schmelzkraters 41 sind:
- Kraterdurchmesser - etwa 60 - 80 % des Innendurchmessers des Ofengefäßes 1, so daß im wandnahen Bereich eine ungeschmolzene, wallartige Schicht 42 als Wärme(Strahlungs-)schutz für die Ausmauerung 2 der Wand 15 verbleibt.
- Kratertiefe - in Abhängigkeit von der Ofenauslegung (Größe und Geometrie) zwischen 1000 und 1500 mm, unter der Zielsetzung, daß am Boden des Kraters 41 ein flüssiges Bad (Metall und Schlacke) vorliegt.

In den so ausgebildeten Schmelzkrater 41 werden innerhalb der nächsten 11 min unter Stromzuführung (ca. 65 MW) (Elektrodenposition A) ca. 17 t Eisenschwamm 29 und ca. 1000 kg Kalk über die Chargierschächte 26, 27 kontinuierlich zugeführt (Fig. 6d) (die vier Chargierschächte 27 für Eisenschwamm 29 werden abwechselnd dosiert, z.B. über eine Zellradschleuse, - jeweils zu zweit - entleert und anschließend ebenso befüllt/entleert). Das Schmelzen/Frischen des Eisenschwammes 29 in dem Schmelzkrater 41 erfolgt unter Schaumschlacke und bei Inertgasbodenspülung ebenfalls kontinuierlich durch Einblasen von insgesamt ca. 650 Nm³ O₂ und ca. 100 kg Feinkohle zur Bildung von Schaumschlacke (mittels zweier O₂-Frischlanzen 38 und O₂/Kohle mittels eines Manipulators, der durch die Schlackentür 43 zugeführt ist).

Ein Teil der entstehenden Schlacke fließt durch die Schlackentür 43 aus. Die Abgase werden durch den Schrottvorwärmschacht 21 geleitet und für die Vorwärmung des dort inzwischen wieder eingefüllten Mischschrottes 22 verwendet (Fig. 6d). Die durchschnittliche Vorwärmtemperatur des Mischschrottes 22 beträgt ca. 400°C.

Nach der ersten kontinuierlichen Zugabe von Eisenschwamm (2. Eisenschwamm-Teilmenge) werden die Elektroden 34 in die Elektrodenposition B hochgefahren (power-off). Danach werden in den Schmelzkrater 41 erneut ca. 27 t Mischschrott 22 (2. Mischschrott-Portion durch den Schrottvorwärmschacht 21), ca. 10 t Eisenschwamm 29 (3. Eisenschwamm-Teilmenge durch die Chargierschächte 27) sowie 800 kg Kalk und 250 kg Kohle (über die Chargierschächte 26) zugegeben (Wiederholung der in den Fig. 6b bis 6e dargestellten Verfahrensschritte).

Innerhalb der nächsten 8 min wird in dem Schüttkegel unter Stromzuführung (von der Spitze des Schüttkegels angefangen) und O₂-Einblasen (ca. 250 Nm³ O₂) erneut ein Schmelzkrater 41 erzeugt (Fig. 6c), in den anschließend, wie bereits beschrieben, die vierte Eisenschwamm-Teilmenge aus ca. 17 t unter Zuführung von 1000 kg Kalk über die Chargierschächte 26, 27 innerhalb von 11 min kontinuierlich chargiert wird. Dabei werden zum Frischen und für die Schaumschlackenfahrweise bei gleichzeitiger Inertgasspülung in den Schmelzkrater 41 ca. 650 Nm³ O₂ sowie ca. 100 kg Feinkohle über zwei Frischlanzen 39 und einen Manipulator kontinuierlich zugeführt (Fig. 6d). Ein Teil der Schlacke fließt aus.

Während einer anschließenden Flachbadperiode von ca. 8 min (Fig. 6f und 6g) (auch Fertigschmelzen des Schmelzkraters, d.h. Niederschmelzen des von den Eisenträgern gebildeten Walles 42 im wandnahen Bereich des Ofengefäßes 1) wird das Metallbad 6 unter Stromzuführung und Inertgasspülung und unter Zugabe von 400 kg Kalk über die Chargierschächte 26 und Einblasen von ca. 400 Nm³ O₂ und ca. 100 kg Kohle über die Frischlanzen 38 und Manipulator (auch zur Bildung von Schaumschlacke) bis zum Abstich fertig gefrischt und zugleich aufgeheizt (Abstich bei 0,10 % C und 1640°C).

Die beim Schmelzen/Frischen der zweiten Eisenschwamm-Teilmenge sowie während der anschließenden Flachbadperiode entstandenen Abgase werden zur Vorwärmung der ersten Mischschrott-Teilmenge für die nächste Schmelze genutzt.

Eine Zusammenfassung wichtiger Betriebsparameter ist aus Tafel 2 ersichtlich.

Erfindungsgemäß kann das Mengenverhältnis Schrott : Eisenschwamm im Einsatz in weiten Bereichen variieren; es kann auch nur mit Schrott (100 % im Einsatz) gearbeitet werden.

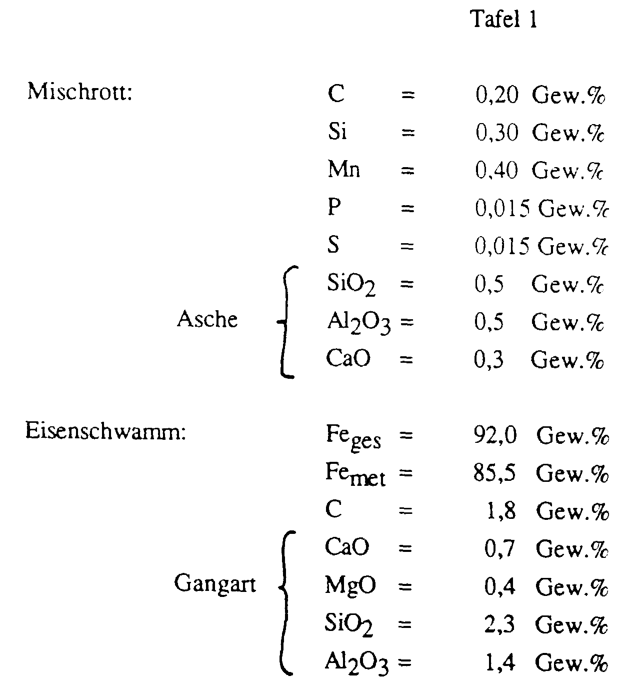

**Tafel 2**

| Einsatzstoffe | |
|---|---|
| • Mischschrott (MS) | 550 kg/t Rohstahl |
| • Eisenschwamm | 550 kg/t Rohstahl |
| • Stückkalk | 40 kg/t Rohstahl |
| • Kohle | 8 kg/t Rohstahl |
| • O₂ | 22 Nm³/t Rohstahl |
| | |

| Produkte | |
|---|---|
| • Schlacke (18 % FeOₙ | 100 kg/t Rohstahl |
| % CaO/% SiO₂ = 2,0) | |
| • Abgas (ohne Falschluft, CO₂/CO = 0,25) | 33 Nm³/t Rohstahl |
| • Rohstahl ca. | 100 t/h |
| | |
| Elektroenergieverbrauch | 420 kWh/t Rohstahl |
| | |
| Tap-to-tap-Zeit | 58 min |
| • Ofenreparatur + Elektroden-Nachsetzen | 5 min |
| • Chargieren 27 t MS (1. Mischschrott-Teilmenge) und 10 t Eisenschwamm (1. Eisenschwamm-Teilmenge); Schmelzen eines Schmelzkraters | 10 min (= 2 + 8 min) |
| • 1. Kontinuierliches Chargieren/Schmelzen/ Frischen von 17 t Eisenschwamm (2. Eisenschwamm-Teilmenge) | 11 min |
| • Chargieren 27 t MS (2. Mischschrott-Teilmenge) und 10 t Eisenschwamm (3. Eisenschwamm-Teilmenge); Schmelzen eines Schmelzkraters | 10 min (= 2 + 8 min) |
| • 2. Kontinuierliches Chargieren/Schmelzen/ Frischen von 17 t Eisenschwamm (4. Eisenschwamm-Teilmenge) | 11 min |
| • Flachbadperiode (Restschmelzen, Fertigfrischen und Aufheizen des Bades) | 8 min |
| • Abstich | 3 min |

Prinzipiell können vor dem Chargieren der Eisenträger II Eisenträger I auch in mehr als einer einzigen Teilmenge chargiert werden; ebenso ist es möglich, zwischendurch eine lediglich Eisenträger I enthaltende Teilmenge zu chargieren. Das erfindungsgemäße Verfahren ermöglicht diesbezüglich verschiedene Variationen, die in Abhängigkeit der zur Verfügung stehenden Mengen an Eisenträger I und II wählbar sind.

## Patentansprüche

1. Verfahren zum Herstellen von Eisenschmelzen, insbesondere von Stahlschmelzen, durch chargenweises Einschmelzen von Eisenträgern (22, 29), d.h. eisenhältigem Material, in einem metallurgischen Gefäß (1) mit Hilfe von zumindest zum Teil durch mindestens einen Lichtbogen eingebrachter Energie, gekennzeichnet durch die Kombination folgender Merkmale:
- Chargieren einer ersten Teilmenge des Gesamteinsatzes der Eisenträger (22) unter Bildung eines Schüttkegels im Zentrumsbereich,
- Schmelzen eines zentralen Kraters (41) in den von der ersten Teilmenge gebildeten Schüttkegel mit Hilfe zentrumsnahe eingebrachter Lichtbogenenergie,
- Chargieren mindestens einer weiteren Teilmenge in den zentralen Krater (41) mit anschließendem abermaligen Schmelzen eines zentralen Kraters (41) und
- vollständiges Einschmelzen der noch festen Eisenträger (22, 29) mit Hilfe zentrumsentfernter und wandnäher mittels schwenkbarer Elektroden eingebrachter Lichtbogenenergie,
- worauf der Abstich gegebenenfalls nach einem Frischen und/oder Feinen erfolgt.

2. Verfahren nach Anspruch 1, dadurch gekennzeichnet, daß die Eisenträger vor dem Chargieren in das metallurgische Gefäß (1) in einen Vorwärmschacht (21) eingebracht, von aus dem metallurgischen Gefäß (1) abgezogenen heißen Prozeßgasen umströmt und anschließend in das metallurgische Gefäß (1) heiß chargiert werden.

3. Verfahren nach Anspruch 1 oder 2, dadurch gekennzeichnet, daß zur Herstellung von Stahl Schlackenbildner (28) und gegebenenfalls Kohlenstoffträger chargiert werden, vorzugsweise in Teilmengen.

4. Verfahren nach Anspruch 3, dadurch gekennzeichnet, daß eine Teilmenge der Schlackenbildner (28) bereits mit der ersten Teimenge der Eisenträger (22) unter möglichst frühzeitiger Bildung einer Schaumschlacke chargiert wird.

5. Verfahren nach einem oder mehreren der Ansprüche 1 bis 4, dadurch gekennzeichnet, daß Prozeßgase durch Zuführen eines sauerstoffhältigen Gases in die und/oder auf die Schaumschlacke und/oder oberhalb derselben in das metallurgische Gefäß (1) und/oder in den Vorwärmschacht (21) nachverbrannt werden.

6. Verfahren nach einem oder mehreren der Ansprüche 1 bis 5, dadurch gekennzeichnet, daß das Schmelzen der ersten Teilmenge durch Einblasen eines sauerstoffhältigen Gases unterstützt wird.

7. Verfahren nach einem oder mehreren der Ansprüche 1 bis 6, dadurch gekennzeichnet, daß das Schmelzen der der ersten Teilmenge nachfolgend chargierten Teilmenge(n) durch Einblasen eines sauerstoffhältigen Gases zumindest unterstützt wird.

8. Verfahren nach einem oder mehreren der Ansprüche 1 bis 7, dadurch gekennzeichnet, daß eine Restschmelze (6) in dem metallurgischen Gefäß (1) belassen wird, und die erste Teilmenge in die Restschmelze (6) chargiert wird.

9. Verfahren nach einem oder mehreren der Ansprüche 1 bis 8, dadurch gekennzeichnet, daß als Eisenträger Mischschrott (22) und/oder Feinschrott und/oder Schrederschrott eingesetzt wird, wobei die Eisenträger nur gering mit organischen Anteilen verunreinigt sind.

10. Verfahren nach einem oder mehreren der Ansprüche 1 bis 9, dadurch gekennzeichnet, daß als Eisenträger Mischschrott (22) und/oder Feinschrott und/oder Schrederschrott mit nur geringen organischen Anteilen (Eisenträger I) einerseits und Eisenschwamm (Eisenträger II) andererseits eingesetzt werden, wobei die erste Teilmenge von Eisenträgern I sowie gegebenenfalls Eisenschwamm und die weitere(n) Teilmenge(n) zumindest teilweise von Eisenträgern II gebildet wird bzw. werden.

11. Verfahren nach Anspruch 10, dadurch gekennzeichnet, daß nur die Eisenträger I von aus dem metallurgischen Gefäß (1) abgezogenen heißen Prozeßgasen umströmt und anschließend in das metallurgische Gefäß (1) heiß chargiert werden, wogegen Eisenträger II ohne Vorwärmung durch die heißen Prozeßgase chargiert werden.

12. Verfahren nach einem oder mehreren der Ansprüche 1 bis 11, dadurch gekennzeichnet, daß eine Bodenspülung mit Inertgas durchgeführt wird.

13. Verfahren nach einem oder mehreren der Ansprüche 1 bis 12, dadurch gekennzeichnet, daß ein sauerstoffhältiges Gas über mindestens eine Ein-/Aufblaslanze und/oder Düse bzw. Unterbaddüse in die Schmelze eingeblasen wird.

14. Verfahren nach einem oder mehreren der Ansprüche 1 bis 13, dadurch gekennzeichnet, daß feinkörnige Materialien, wie Eisenträger, Kohlenstoffträger (z.B. aufbereitete organische Leichtfraktion) und/oder Schlackenbildner durch mindestens eine Ein-/Aufblaslanze und/oder Düse bzw. Unterbaddüse und/oder Hohlelektrode unter Verwendung eines Trägergases in das Metallbad eingeblasen werden.

15. Verfahren nach einem oder mehreren der Ansprüche 2 bis 14, dadurch gekennzeichnet, daß die Vorwärmtemperatur der Eisenträger (Eisenträger I) durch Wahl der Länge der Verweilzeit der Eisenträger (Eisenträger I) im Vorwärmschacht (21) eingestellt wird.

16. Verfahren nach einem oder mehreren der Ansprüche 2 bis 15, dadurch gekennzeichnet, daß die Vorwärmtemperatur der Eisenträger (Eisenträger I) durch Wahl von Menge, Zusammensetzung und Temperatur der aus dem metallurgischen Gefäß (1) abgezogenen Prozeßgase eingestellt wird.

17. Verfahren nach Anspruch 16, dadurch gekennzeichnet, daß die Vorwärmtemperatur der Eisenträger (Eisenträger I) durch eine Nachverbrennung der Prozeßgase eingestellt wird.

18. Anlage zum Herstellen von Eisenschmelzen, insbesondere von Stahlschmelzen, gekennzeichnet durch die Kombination folgender Merkmale:
- ein eine Eisenschmelze (6) aufnehmendes metallurgisches Gefäß (1),
- mindestens einen ortsfesten, Eisenträger (22, 29) aufnehmenden Schacht (21, 27), der in das metallurgische Gefäß (1) über dessen Deckel (19) mittels einer Absperreinrichtung (25) zum Chargieren der Eisenträger in Teilmengen mündet und
- in das metallurgische Gefäß (1) von oben ragende Elektroden (34), die während des Herstellens von Eisenschmelzen von einer in Richtung zum Gefäßzentrum gerichteten Position A in eine näher zur Wand (15) des metallurgischen Gefäßes (1) gerichteten Position C schwenkbar sind.

19. Anlage nach Anspruch 18, dadurch gekennzeichnet, daß das metallurgische Gefäß (1) kippbar ist.

20. Anlage nach Anspruch 18 oder 19, dadurch gekennzeichnet, daß das metallurgische Gefäß (1) heb-, senk- und verfahrbar ist.

21. Anlage nach einem oder mehreren der Ansprüche 18 bis 20, dadurch gekennzeichnet, daß der Schacht (21) über eine im Zentrumsbereich des Deckels (19) angeordnete Öffnung (20) in das metallurgische Gefäß (1) mündet und daß mehrere Elektroden (34) den Schacht (21) umgeben, vorzugsweise in radialsymmetrischer Anordnung, und durch den Deckel (19) in das Innere des metallurgischen Gefäßes (1) ragen.

22. Anlage nach einem oder mehreren der Ansprüche 18 bis 21, dadurch gekennzeichnet, daß die Elektroden (34) in einer zum metallurgischen Gefäß (1) radialgerichteten Vertikalebene schwenkbar sind, vorzugsweise über einen Bereich, von der Vertikalen ausgehend in eine in Richtung zum Zentrum des metallurgischen Gefäßes (1) unter 30° zur Vertikalen gerichteten Position A bis in eine um max. 10 ° von der Vertikalen abweichende nach außen gerichtete Position C.

23. Anlage nach einem oder mehreren der Ansprüche 18 bis 22, dadurch gekennzeichnet, daß die an der Öffnung (20) des Schachtes (21) angeordnete Absperrvorrichtung (25) gasdurchlässig ist und eine Gasableitung (23) am oberen Schachtende vorgesehen ist.

24. Anlage nach Anspruch 23, dadurch gekennzeichnet, daß zu einem zentralen Schacht (21), der mit der gasdurchlässigen Absperrvorrichtung (25) versehen ist, mindestens ein seitlich benachbarter Chargierschacht (26, 27) vorgesehen ist, der über den Deckel (19) des metallurgischen Gefäßes (1) mittels einer gasdichten Absperreinrichtung (30) in das metallurgische Gefäß (1) mündet.

25. Anlage nach Anspruch 24, dadurch gekennzeichnet, daß der untere Teil des Chargierschachtes (27) mit einer schrägen, zum Zentrum des metallurgischen Gefäßes gerichteten Auslaufschurre (27') versehen ist.

26. Anlage nach einem oder mehreren der Ansprüche 18 bis 25, dadurch gekennzeichnet, daß von der Seite und/oder durch den Deckel (19) in das metallurgische Gefäß (1) einbringbare Blaslanzen (38) und/oder Düsen für ein sauerstoffhältiges Gas vorgesehen sind.

27. Anlage nach einem oder mehreren der Ansprüche 18 bis 26, dadurch gekennzeichnet, daß im die Eisenträger I aufnehmenden Schacht (21) mindestens eine Düse für die Zuführung von sauerstoffhältigem und/oder stickstoffhältigem Gas vorgesehen ist

28. Anlage nach einem oder mehreren der Ansprüche 18 bis 27, dadurch gekennzeichnet, daß das metallurgische Gefäß (1) mit Bodendüsen (40) für Inertgas und/oder mit Unterbaddüsen für sauerstoffhältiges Gas ausgestattet ist.

29. Anlage nach einem oder mehreren der Ansprüche 18 bis 28, dadurch gekennzeichnet, daß das metallurgische Gefäß mit mindestens einer Ein-/Aufblaslanze (39) bzw. Düse und/oder Unterbaddüse und/oder Hohlelektrode für die Zuführung von feinkörnigen Materialien (Eisenträger, Kohlenstoffträger und/oder Schlackenbildner) ausgestattet ist.

30. Anlage nach einem oder mehreren der Ansprüche 18 bis 29, dadurch gekennzeichnet, daß das metallurgische Gefäß (1) auf Hubzylindern (8, 9) gegenüber dem Fundament (10) abgestützt ist, vorzugsweise auf drei Hubzylindern (8, 9).

31. Anlage nach Anspruch 30, dadurch gekennzeichnet, daß das metallurgische Gefäß (1) in Schmelzposition mittels seitlich in dessen Wand (15) einsetztbarer Verriegelungsbolzen (14) fixierbar ist, wobei mindestens zwei Verriegelungsbolzen (14) unter Bildung einer Schwenkachse (18) für das metallurgische Gefäß (1) zueinander fluchtend angeordnet sind, und daß die Verriegelungsbolzen mittels einer Stelleinrichtung (17) aus einer in die Wand (15) des metallurgischen Gefäßes (1) eingreifenden Verriegelungsposition in eine zurückgezogene, das metallurgische Gefäß (1) freigebende Position und umgekehrt bringbar sind.

32. Anlage nach einem oder mehreren der Ansprüche 18 bis 31, gekennzeichnet durch einen bis unterhalb des metallurgischen Gefäßes (1) fahrbaren Wagen (11), auf dem wahlweise eine Pfanne (12) oder das metallurgische Gefäß (1) selbst absetzbar und mittels des Wagens (11) verfahrbar sind.

## Claims

1. A method for producing iron melts, in particular steel melts, by batch-wisely melting iron carriers (22, 29), i.e. iron-containing material, in a metallurgical vessel (1) by the aid of energy at least partially introduced by at least one electric arc, characterized by the combination of the following characteristic features:
- charging of a first partial amount of the overall charge of the iron carriers (22) under the formation of a dumping cone in the center region,
- melting of a central crater (41) in the dumping cone formed by the first partial amount, by the aid of electric arc energy introduced close to the center,
- charging of at least one further partial amount into the central crater (41) followed by a new melting of a central crater (41), and
- complete melting of the yet solid iron carriers (22, 29) by the aid of electric arc energy introduced remote from the center and closer to the wall by means of pivotable electrodes,
- followed by tapping optionally after refining and/or fining.

2. A method according to claim 1, characterized in that the iron carriers prior to being charged into the metallurgical vessel (1) are introduced into a preheating shaft (21), enveloped by hot process gases drawn off the metallurgical vessel (1) and subsequently charged into the metallurgical vessel (1) in the hot state.

3. A method according to claim 1 or claim 2, characterized in that slag formers (28) and optionally carbon carriers are charged, preferably in partial amounts, for the production of steel.

4. A method according to claim 3, characterized in that a partial amount of said slag formers (28) is already charged with the first partial amount of iron carriers (22), while forming a foamed slag as early as possible.

5. A method according to one or several of claims 1 to 4, characterized in that process gases are afterburned by feeding an oxygen-containing gas into and/or onto the foamed slag and/or above the same into the metallurgical vessel (1) and/or into the preheating shaft (21).

6. A method according to one or several of claims 1 to 5, characterized in that melting of the first partial amount is assisted by blowing in an oxygen-containing gas.

7. A method according to one or several of claims 1 to 6, characterized in that melting of the partial amount(s) charged after the first partial amount is at least assisted by blowing in an oxygen-containing gas.

8. A method according to one or several of claims 1 to 7, characterized in that a residual melt (6) is left in the metallurgical vessel (1) and the first partial amount is charged into the residual melt (6).

9. A method according to one or several of claims 1 to 8, characterized in that mixed scrap (22) and/or fine scrap and/or Shredder scrap are used as said iron carriers, with the iron carriers being only slightly contaminated by organic portions.

10. A method according to one or several of claims 1 to 9, characterized in that mixed scrap (22) and/or fine scrap and/or Shredder scrap having but low organic portions (iron carriers I), on the one hand, and sponge iron (iron carriers II), on the other hand, are used as said iron carriers, whereby the first partial amount is made up by iron carriers I as well as optionally sponge iron and the further partial amount(s) at least partially is (are) made up by iron carriers II.

11. A method according to claim 10, characterized in that only the iron carriers I are enveloped by hot process gases drawn off the metallurgical vessel (1) and subsequently charged into the metallurgical vessel (1) in the hot state, whereas iron carriers II are charged without preheating by the hot process gases.

12. A method according to one or several of claims 1 to 11, characterized in that bottom flushing is carried out by means of an inert gas.

13. A method according to one or several of claims 1 to 12, characterized in that an oxygen-containing gas is blown into the melt via at least one blow-in/top-blowing lance and/or tuyere or submerged tuyere.

14. A method according to one or several of claims 1 to 13, characterized in that fine-grained materials such as iron carriers, carbon carriers (such as treated organic light fraction) and/or slag formers are blown into the metal bath through at least one blow-in/top-blowing lance and/or tuyere or submerged tuyere and/or hollow electrode, using a carrier gas.

15. A method according to one or several of claims 2 to 14, characterized in that the preheating temperature of the iron carriers (iron carriers I) is adjusted by selecting the length of the residence time of the iron carriers (iron carriers I) within the preheating shaft (21).

16. A method according to one or several of claims 2 to 15, characterized in that the preheating temperature of the iron carriers (iron carriers I) is adjusted by selecting the amount, composition and temperature of the process gases drawn off the metallurgical vessel (1).

17. A method according to claim 16, characterized in that the preheating temperature of the iron carriers (iron carriers I) is adjusted by afterburning the process gases.

18. A plant for producing iron melts, in particular steel melts, characterized by the combination of the following characteristic features:
- a metallurgical vessel (1) receiveing an iron melt (6),
- at least one stationary shaft (21, 27) receiving iron carriers (22, 29) and running into the metallurgical vessel (1) via its lid (19) by means of a locking device (25) for charging the iron carriers in partial amounts, and
- electrodes (34) projecting into the metallurgical vessel (1) from top, which, during the production of iron melts, are capable of being pivoted from a position A oriented in the direction towards the center of the vessel into a position C oriented closer to the wall (15) of the metallurgical vessel (1).

19. A plant according to claim 18, characterized in that the metallurgical vessel (1) is tiltable.

20. A plant according to claim 18 or 19, characterized in that the metallurgical vessel (1) is liftable, lowerable and displaceable.

21. A plant according to one or several of claims 18 to 20, characterized in that the shaft (21) runs into the metallurgical vessel (1) via an opening (20) arranged in the center region of the lid (19) and that several electrodes (34) surround the shaft (21), preferably in a radially symmetrical arrangement, and project into the interior of the metallurgical vessel (1) through the lid (19).

22. A plant according to one or several of claims 18 to 21, characterized in that the electrodes (34) are pivotable in a vertical plane oriented radially to the metallurgical vessel (1), preferably over a region departing from the vertical into a position A oriented towards the center of the metallurgical vessel (1) at an angle of 30° relative to the vertical as far as to an outwardly directed position C deviating from the vertical by a maximum angle of 10°.

23. A plant according to one or several of claims 18 to 22, characterized in that the locking device (25) arranged at the opening (20) of the shaft (21) is gas-permeable and a gas discharge duct (23) is provided on the upper shaft end.

24. A plant according to claim 23, characterized in that at least one charging shaft (26, 27) laterally adjacent to a central shaft (21) equipped with the gas-permeable locking device (25) is provided, which charging shaft runs into the metallurgical vessel (1) via the lid (19) of the metallurgical vessel (1) by means of a gastight locking device (30).

25. A plant according to claim 24, characterized in that the lower part of the charging shaft (27) is provided with an oblique discharge chute (27') oriented towards the center of the metallurgical vessel.

26. A plant according to one or several of claims 18 to 25, characterized in that blowing lances (38) and/or tuyeres for an oxygen-containing gas, which can be introduced into the metallurgical vessel (1) from the side and/or through the lid (19), are provided.

27. A plant according to one or several of claims 18 to 26, characterized in that at least one tuyere for feeding an oxygen-containing and/or nitrogen-containing gas is provided in the shaft (21) receiving the iron carriers I.

28. A plant according to one or several of claims 18 to 27, characterized in that the metallurgical vessel (1) is equipped with bottom tuyeres (40) for an inert gas and/or with submerged tuyeres for an oxygen-containing gas.

29. A plant according to one or several of claims 18 to 28, characterized in that the metallurgical vessel is equipped with at least one blow-in/top-blowing lance (39) or tuyere and/or submerged tuyere and/or hollow electrode for supplying fine-grained materials (iron carriers, carbon carriers and/or slag formers).

30. A plant according to one or several of claims 18 to 29, characterized in that the metallurgical vessel (1) is supported relative to the base (10) on lifting cylinders (8, 9), preferably on three lifting cylinders (8, 9).

31. A plant according to claim 30, characterized in that the metallurgical vessel (1) in the melting position is fixable by means of locking pins (14) capable of being inserted laterally in its wall (15), at least two locking pins (14) being arranged in an aligned manner while forming a pivot axis (18) for the metallurgical vessel (1), and that the locking pins are movable by means of an actuating device (17) from a locking position engaging in the wall (15) of the metallurgical vessel (1) into a retracted position releasing the metallurgical vessel (1), and back.

32. A plant according to one or several of claims 18 to 31, characterized by a carriage (11) movable as far as to below the metallurgical vessel (1) and on which alternatively a ladle (12) or the metallurgical vessel (1) itself may be deposited and displaced by means of the carriage (11).

## Revendications

1. Procédé de production de fer en fusion, en particulier d'acier en fusion, par fusion discontinue de porteurs de fer (22, 29), c'est-à-dire des matières contenant du fer, dans une cuve métallurgique (1) à l'aide d'énergie amenée, au moins en partie, par au moins un arc électrique, caractérisé par la combinaison des caractéristiques suivantes:
- le chargement d'une première partie d'ensemble de la charge d'ensemble des porteurs de fer (22) avec formation d'un cône de déversement dans la zone centrale,
- la fusion d'un cratère central (41) dans le cône de déversement formé par la première partie d'ensemble à l'aide d'énergie d'arc électrique amenée à proximité du centre,
- le chargement d'au moins une partie d'ensemble supplémentaire dans le cratère central (41) avec ensuite à nouveau une fusion d'un cratère central (41) et
- la fusion complète des porteurs de fer encore solides (22, 29) à l'aide d'énergie d'arc électrique, qui est à l'écart du centre et qui est amenée plus près de la paroi au moyen d'électrodes pivotantes,
- sur quoi la coulée a lieu éventuellement après un soufflage et/ou un raffinage.

2. Procédé suivant la revendication 1, caractérisé en ce que les porteurs de fer sont amenés dans un conduit de préchauffage (21) avant le chargement dans la cuve métallurgique (1), ils sont déviés par des gaz du processus chauds tirés de la cuve métallurgique (1) et ils sont ensuite chargés à l'état chaud dans la cuve métallurgique (1).

3. Procédé suivant l'une des revendications 1 ou 2, caractérisé en ce que pour la production d'acier, des fondants de laitier (28) et, le cas échéant, des porteurs de carbone sont chargés, de préférence, en parties d'ensemble.

4. Procédé suivant la revendication 3, caractérisé en ce qu'une partie d'ensemble des fondants de laitier (28) est chargée déjà avec la première partie d'ensemble des porteurs de fer (22) avec formation, aussi précoce que possible, d'un laitier mousseux.

5. Procédé suivant une ou plusieurs des revendications 1 à 4, caractérisé en ce que des gaz de processus sont soumis à une post-combustion par l'amenée d'un gaz contenant de l'oxygène dans et/ou sur le laitier mousseux et/ou au-dessus de celui-ci dans la cuve métallurgique (1) et/ou dans le conduit de préchauffage (21).

6. Procédé suivant une ou plusieurs des revendications 1 à 5, caractérisé en ce que la fusion de la première partie d'ensemble est soutenue par l'insufflation d'un gaz à teneur en oxygène.

7. Procédé suivant une ou plusieurs des revendications 1 à 6, caractérisé en ce que la fusion de la ou des partie(s) d'ensemble chargée(s) consécutivement à la première partie d'ensemble est soutenue au moins par l'insufflation d'un gaz à teneur en oxygène.

8. Procédé suivant une ou plusieurs des revendications 1 à 7, caractérisé en ce qu'une coulée résiduelle (6) est laissée dans la cuve métallurgique (1) et la première partie d'ensemble est chargée dans la coulée résiduelle (6).

9. Procédé suivant une ou plusieurs des revendications 1 à 8, caractérisé en ce que sont utilisés comme porteurs de fer, des déchets mixtes (22) et/ou des déchets fins et/ou des déchets Shredder, les porteurs de fer n'étant contaminés que faiblement par des fractions organiques.

10. Procédé suivant une ou plusieurs des revendications 1 à 9, caractérisé en ce que sont utilisés comme porteurs de fer, des déchets mixtes (22) et/ou des déchets fins et/ou des déchets Shredder ne comprenant que des fractions organiques réduites (porteurs de fer I), d'une part, et un fer spongieux (porteurs de fer II), d'autre part, la première partie d'ensemble de porteurs de fer I, ainsi que, le cas échéant, le fer spongieux et le ou les autre(s) partie(s) d'ensemble étant formé ou respectivement formés au moins partiellement par des porteurs de fer II.

11. Procédé suivant la revendication 10, caractérisé en ce que seuls les porteurs de fer I sont déviés par des gaz de processus chauds tirés de la cuve métallurgique (1) et ensuite chargés à l'état chaud dans la cuve métallurgique (1), tandis que les porteurs de fer II sont chargés sans préchauffage par les gaz de processus chauds.

12. Procédé suivant une ou plusieurs des revendications 1 à 11, caractérisé en ce qu'un curage de fond est effectué avec un gaz inerte.

13. Procédé suivant une ou plusieurs des revendications 1 à 12, caractérisé en ce qu'un gaz à teneur en oxygène est insufflé dans le fondant par l'intermédiaire d'au moins une lance d'insufflation/de soufflage et/ou d'un ajutage, respectivement d'un ajutage de bain inférieur.

14. Procédé suivant une ou plusieurs des revendications 1 à 13, caractérisé en ce que les matériaux à grains fins, tels que les porteurs de fer, les porteurs de carbone (par exemple une fraction organique légère préparée) et/ou des fondants de laitier sont insufflés dans le bain métallique par au moins une lance d'insufflation/de soufflage et/ou un ajutage, respectivement un ajutage de bain inférieur et/ou une électrode creuse avec utilisation d'un gaz porteur.

15. Procédé suivant une ou plusieurs des revendications 2 à 14, caractérisé en ce que la température de préchauffage des porteurs de fer (porteurs de fer I) est réglée par la sélection de la longueur de la durée de séjour des porteurs de fer (porteurs de fer I) dans le conduit de préchauffage (21).

16. Procédé suivant une ou plusieurs des revendications 2 à 15, caractérisé en ce que la température de préchauffage des porteurs de fer (porteurs de fer I) est réglée par la sélection de la quantité, de la composition et de la température des gaz de processus tirés de la cuve métallurgique (1).

17. Procédé suivant la revendication 16, caractérisé en ce que la température de préchauffage des porteurs de fer (porteurs fer I) est réglée par une post-combustion des gaz de processus.

18. Installation de production de fer en fusion, en particulier d'acier en fusion, caractérisée par la combinaison des caractéristiques suivantes:
- une cuve métallurgique (1) recevant du fer en fusion (6),
- au moins un conduit (21, 27) fixe, qui reçoit des porteurs de fer (22, 29) et qui débouche dans la cuve métallurgique (1) par le couvercle (19) de celle-ci au moyen d'un dispositif d'obturation (25) pour le chargement des porteurs de fer en parties d'ensemble, et
- des électrodes (34), qui font saillie dans la cuve métallurgique (1) par le dessus et qui sont pivotantes, pendant la production du fer en fusion, depuis une position A orientée suivant une direction tournée vers le centre de la cuve, dans une position C orientée plus près de la paroi (15) de la cuve métallurgique (1).

19. Installation suivant la revendication 18, caractérisée en ce que la cuve métallurgique (1) est basculante.

20. Installation suivant l'une des revendications 18 ou 19, caractérisée en ce que la cuve métallurgique (1) peut être levée, baissée et déplacée.

21. Installation suivant une ou plusieurs des revendications 18 à 20, caractérisée en ce que le conduit (21) débouche dans la cuve métallurgique (1) par une ouverture (20), qui est agencée dans la zone centrale du couvercle (19), et en ce que plusieurs électrodes (34) entourent le conduit (21), de préférence selon un agencement à symétrie radiale, et font saillie à l'intérieur de la cuve métallurgique (1) à travers le couvercle (19).

22. Installation suivant une ou plusieurs des revendications 18 à 21, caractérisée en ce que les électrodes (34) sont pivotantes dans un plan vertical orienté de façon radiale par rapport à la cuve métallurgique (1), de préférence sur une gamme partant de la verticale dans une position A tournée en direction du centre de la cuve métallurgique (1) sous 30° par rapport à la verticale jusqu'à une position C tournée vers l'extérieur s'écartant d'environ maximum 10° de la verticale.

23. Installation suivant une ou plusieurs des revendications 18 à 22, caractérisée en ce que le dispositif d'obturation (25), qui est agencé à hauteur de l'ouverture (20) de la cuve (21), est perméable aux gaz et en ce qu'une dérivation de gaz (23) est prévue à l'extrémité supérieure du conduit.

24. Installation suivant la revendication 23, caractérisée en ce qu'il est prévu au moins un conduit de chargement (26, 27), qui est agencé latéralement et de façon contiguë par rapport à un conduit central (21), lequel est pourvu du dispositif d'obturation (25), perméable aux gaz, et qui débouche dans la cuve métallurgique (1) par le couvercle (19) de la cuve métallurgique (1) au moyen d'un dispositif d'obturation (30) étanche au gaz.

25. Installation suivant la revendication 24, caractérisée en ce que la partie inférieure du conduit de chargement (27) est pourvue d'une goulotte de sortie (27') inclinée, qui est tournée vers le centre de la cuve métallurgique.

26. Installation suivant une ou plusieurs des revendications 18 à 25, caractérisée en ce qu'il est prévu des lances de soufflage (38) et/ou des ajutages pour un gaz à teneur en oxygène pouvant être introduits dans la cuve métallurgique (1) depuis le côté et/ou à travers le couvercle (19).

27. Installation suivant une ou plusieurs des revendications 18 à 26, caractérisée en ce qu'il est prévu dans le conduit (21) recevant les porteurs de fer I au moins un ajutage destiné à l'amenée de gaz à teneur en oxygène et/ou en azote.

28. Installation suivant une ou plusieurs des revendications 18 à 27, caractérisée en ce que la cuve métallurgique (1) est munie d'ajutages de fond (40) destinés à des gaz inertes et/ou d'ajutages de bain inférieur destinés à des gaz à teneur en oxygène.

29. Installation suivant une ou plusieurs des revendications 18 à 28, caractérisée en ce que la cuve métallurgique est munie d'au moins une lance d'insufflation/de soufflage (39), respectivement d'un ajutage et/ou d'un ajutage de bain inférieur et/ou d'une électrode creuse pour l'amenée des matières à grains fins (porteurs de fer, porteurs de carbone et/ou fondants de laitier).

30. Installation suivant une ou plusieurs des revendications 18 à 29, caractérisée en ce que la cuve métallurgique (1) est en appui sur des cylindres de levage (8, 9) vis-à-vis de la fondation (10), de préférence sur trois cylindres de levage (8, 9).

31. Installation suivant la revendication 30, caractérisée en ce que la cuve métallurgique (1) peut être fixée en position de fusion au moyen de boulons de verrouillage (14) pouvant être introduits latéralement dans sa paroi (15), au moins deux boulons de verrouillage (14) étant agencés en alignement mutuel avec formation d'un axe de pivotement (18) pour la cuve métallurgique (1), et en ce que les boulons de verrouillage peuvent être amenés, au moyen d'un dispositif de réglage (17), dans une position retirée libérant la cuve métallurgique (1) à partir d'une position de verrouillage s'engageant dans la paroi (15) de la cuve métallurgique (1), et inversement.

32. Installation suivant une ou plusieurs des revendications 18 à 31, caractérisée par un chariot (11), qui peut être conduit jusque en dessous de la cuve métallurgique (1) et sur lequel une poche (12) ou la cuve métallurgique (1) elle-même, au choix, peut être déposée et déplacée au moyen du chariot (11).
